# EUROPÄISCHE PATENTANMELDUNG

(11) **EP 1 964 868 A1**
(43) Veröffentlichungstag der Anmeldung: **03.09.2008**
(21) Anmeldenummer: 07004226.2
(22) Anmeldetag: 01.03.2007
(51) Int. Cl.: C08G 18/12, C08G 18/76

(54) **Migrationsarme Polyurethane**

(71) Anmelder: Henkel AG & Co. KGaA, 40589 Düsseldorf (DE)
(72) Erfinder: Franken, Uwe, 41542 Dormagen (DE); Krebs, Michael, 40724 Hilden (DE)
(74) Vertreter: Kann, Wolfgang

(57) **Zusammenfassung**

Die Erfindung betrifft vernetzende 1-Komponenten- oder 2-Komponenten-Polyurethanzusammensetzungen, wobei einer NCO-reaktives Isocyanatumsetzungsprodukt enthalten ist und/oder dieses Isocyanatumsetzurigsprodukt als Synthesebaustein bei der Synthese eines in der Polyurethanzusammensetzung enthaltenen Polyurethanprepolymer eingesetzt worden ist, wobei dieses Isocyanatumsetzungsprodukt ein Reaktionsprodukt aus Polyolen und aromatischen Diisocyanaten ist, eine Molmasse zwischen 300 bis 3000 g/mol und mindestens zwei NCO-Gruppen aufweist, und die 1 K- oder 2K-Polyurethanzusammensetzung nach der Vernetzung nur geringe Anteile an migrationsfähigen aromatischen Di- oder Polyaminen enthält. Weiterhin wird die Verwendung solcher Isocyanatumsezungsprodukte als reaktiver Bestandteil in vernetzbaren Polyurethanzusammensetzungen und daraus hergestellten Formkörpern beschrieben.

## Beschreibung

Die vorliegende Erfindung betrifft reaktive Polyurethanzusammensetzungen, die nach Vernetzung nur geringe Mengen an migrationsfähigen, gesundheitsgefährdenden Polyaminen enthalten oder bilden, sowie deren Herstellung und deren Verwendung in reaktiven ein- und zweikomponentigen Kleb-/Dichtstoffen, Montageschäumen, Vergussmassen sowie in Weich-, Hart- und Integralschäumen.

Reaktive Polyurethane verfügen über NCO- Endgruppen, die mit Wasser oder anderen Verbindungen, die über ein acides Wasserstoffatom verfügen, reagieren können. Diese Form der Reaktivität ermöglicht es, die reaktiven Polyurethane in verarbeitbarem Zustand, beispielsweise flüssig bis hochviskos, an den gewünschten Ort zu bringen und durch Zugabe von Wasser oder anderen Verbindungen, die über ein acides Wasserstoffatom verfügen, auszuhärten.

Reaktive PU-Zusammensetzungen sind bekannt, bei denen der Restanteil an monomeren Diisocyanaten vermindert wird. Gemäß der WO 01/40342 können PU-Zusammensetzungen mit einem niedrigen Gehalt an monomeren Diisocyanaten in einem zweistufigen Verfahren hergestellt werden. Aus einem ersten Umsetzungsprodukt wird das nicht umgesetzte monomere Diisocyanat entfernt und das Produkt weiter umgesetzt. Das Reaktionsprodukt eignet sich zur Verwendung als Bindemittel für reaktive ein- oder zweikomponentige Kleb- / Dichtstoffe oder reaktive Schmelzklebstoffe. Die EP-A-316738 beschreibt ein Verfahren zur Herstellung von Urethangruppen aufweisenden Polyisocyanaten mit einem Gehalt an AusgangsDiisocyanat von maximal 0,4 Gew.-% durch Umsetzung von aromatischen Diisocyanaten mit mehrwertigen Alkoholen und anschließender destillativer Entfernung des nicht umgesetzten, überschüssigen Ausgangs-Diisocyanats.

In der DE 10 2004 038 784 A1 werden monomerarme Polyisocyanate beschrieben. Die dortige Lösung sieht vor, dass reaktive Polyisocyanate durch Einsatz von Fallfilm-Kurzwegverdampfern von monomeren Isocyanaten befreit werden. Insbesondere sollen in den so behandelten Polyisocyanaten oder Prepolymeren der Restmonomergehalt kleiner 0,1 % auf das Polyisocyanat betragen. In der EP 1237971 A1 werden PU-Zusammensetzungen mit niedrigem Gehalt an Isocyanatmonomeren beschrieben, wobei die monomeren Diisocyanate auf einen Gehalt von kleiner 10 % reduziert werden, beispielsweise durch Ausfällen in nicht lösenden Verbindungen. Insbesondere wird die Verwendung von asymmetrischen Diisocyanaten in diesen PU-Verbindungen beschrieben.

Reaktive Polyurethanzusammensetzungen enthalten aus ihrer Herstellung im allgemeinen noch niedermolekulare, monomere Isocyanate. Solche niedermolekularen Isocyanate haben den Nachteil, dass sie gesundheitliche Gefahren hervorrufen. So ist beim Übergang in die Dampfphase oder als Aerosol sicherzustellen, dass Personen nicht mit solchen Dämpfen in Kontakt treten können. Weiterhin sind Hautkontakte mit solchen reaktiven Polyurethanzusammensetzungen möglichst zu vermeiden.

Da Schutz- und Reinigungsmaßnahmen in der Regel mit hohen finanziellen Investitionen oder Kosten verbunden sind, besteht seitens der Anwender ein Bedürfnis nach Produkten, die einen möglichst niedrigen Anteil an monomeren Diisocyanaten aufweisen. Aber nicht nur die Anwendung von reaktiven Polyurethanmassen, die noch monomeres Diisocyanat enthalten, führt zu Problemen, sondern bereits auch das inverkehrbringen. So fallen Stoffe und Zubereitungen, die beispielsweise mehr als 0,1 % freies MDI oder TDI enthalten, unter die Gefahrstoffverordnung und sind entsprechend zu kennzeichnen. Mit der Kennzeichnungspflicht sind spezielle Maßnahmen zur Verpackung und dem Transport verbunden. Das Vorhandensein von monomerem, nicht umgesetztem Diisocyanat führt auch in der Weiterverarbeitung häufig zu Problemen. So können solche Diisocyanate aus der Beschichtung oder Verklebung in die beschichteten oder verklebten Materialien hinein migrieren.

Weiterhin sind nicht nur die monomeren, niedermolekularen Isocyanate gesundheitlich schädlich, auch die entstehenden Umsetzungsprodukte mit Wasser, beispielsweise aromatische Diamine oder Polyamine, sind gesundheitlich bedenklich. Durch Kontakt mit Feuchtigkeit werden Isocyanatgruppen kontinuierlich zu Aminogruppen und weiteren Folgeprodukten umgesetzt. Solche Verbindungen können nicht nur unmittelbar bei dem Aushärten der Polyurethansysteme entstehen, durch die sich verlangsamende Reaktionsgeschwindigkeit es ist auch möglich, dass diese langfristig unter Benutzungsbedingungen, wie beispielsweise höhere Temperaturen und hoher Luftfeuchtigkeit, entstehen können. Diese Aminoverbindungen können auch an die Substratoberfläche wandern oder in umgebende Schichten. Solche wandernden Bestandteile auf Basis von niedermolekuleren, aromatischen Di- oder Polyaminen werden im Folgenden als Migrate bezeichnet.

In Polyurethan-Integralschäumen, die beispielsweise bei der Herstellung von Lenkrädern in Kraftfahrzeugen verwendet werden, sind solche Migrate unerwünscht, da ein Kontakt der aus den Diisocyanaten entstandenen Amine mit der Haut nicht auszuschließen ist. Auch im Verpackungsbereich, speziell bei Lebensmittelverpackungen, sind Migrate unerwünscht. Es kann die Wanderung der Migrate durch das Verpackungsmaterial hindurch zu einer Kontamination des verpackten Gutes führen oder ein Hautkontakt mit der Verpackung kann solche Migrate übertragen.

Der Gehalt der vorhandenen oder entstehenden migrationsfähigen Amine, insbesondere der primären aromatischen Amine, soll für bestimmte Anwendungszwecke unter der auf Anilin-hydrcchlorid bezogenen Nachweisgrenze von 0,2 Mikrogramm Anilinhydrochlorid/100 m Probeflüssigkeit liegen (Bundesinstitut für gesundheitlichen Verbraucherschutz und Veterinärmedizin, BGW, nach amtlicher Sammlung von Untersuchungsverfahren nach § 35 LMBG - Untersuchung von Lebensmitteln/Bestimmung von primären aromatischen Aminen in wässrigen Prüflebensmitteln (§ 35 LMBGL 00.00-6). Für diese Erfindung wird angenommen, dass die aus dem vernetzten Substrat nach dem angegebenen Verfahren extrahierbaren aromatischen Di- und Polyamine der Menge der migrierenden Amine, den Migraten, entspricht. Di- oder Polyamine soll monomere oder polymere Amine umfassen, ebenso werden niedermolekulare Umsetzungsprodukte aus Polyolen mit isocyanaten nach einer Hydrolyse der NCO-Gruppen mit umfasst.

Trotz des vorgenannten Standes der Technik zur Reduzierung der monomere Diisocyanate besteht weiterhin Bedarf an reaktiven Polyurethanzusammensetzungen, die bei und nach Vernetzung nur wenig Migrate bilden, insbesondere keine aromatischen Di- oder Polyamine. Die reaktiven Zusammensetzungen sollen sich sowohl für den Einsatz als ein- und zweikomponentige Kleb-/ Dichtstoffe, insbesondere als Schmelzklebstoffe oder Kaschierklebstoffe, als auch.zur Herstellung von Vergussmassen, Montageschäumen sowie Weich-, Hart- und Integralschäumen eignen.

Die erfindungsgemäße Lösung ist den Patentansprüchen zu entnehmen.
Ein Gegenstand der vorliegenden Erfindung sind vernetzbare 1-Komponenten oder 2-Komponenten Polyurethanzusammensetzungen, die ein NCO-reaktives Isocyanatumsetzungsprodukt enthalten und/oder solche Isocyanatumsetzungsprodukte als Synthesebaustein bei der Synthese eines in der PU-Zusammensetzung enthaltenen Polyurethanprepolymeren eingesetzt worden sind, dadurch gekennzeichnet, dass das lsocyanatumsetzungsprodukt ein Reaktionsprodukt aus Polyolen und aromatischen Diisocyanaten ist, eine Molmasse zwischen 300 bis 3000 g/mol und mindestens zwei NCO-Gruppen aufweist, und die 1 K- oder 2K-Polyurethanzusammensetzung nach der Vernetzung nur geringe Anteile an migrationsfähigen aromatischen Di- oder Polyaminen enthält.

Ein weiterer Gegenstand der Erfindung ist die Verwendung solcher 1K- oder 2K-PU-Zusammensetzungen als Kleb- oder Dichtmasse. Ein weiterer Gegenstand der Erfindung ist die Verwendung dieser Zusammensetzungen als reaktive Vergussmasse oder als aushärtende plastische Masse. Ein weiterer Gegenstand der Erfindung ist die Verwendung dieser Zusammensetzungen als aufschäumende Masse. Ein weiterer Gegens:and der vorliegenden Erfindung sind Formkörper, hergestellt aus erfindungsgemäßen Polyurethanzusammensetzungen durch Formgebung und anschließender Vernetzung.

Die erfindungsgemäß geeigneten PU-Zusammensetzungen werden ausgehend von reaktiven Isocyanatumsetzungsprodukten hergestellt. Verfahren und Herstellungsweise solcher reaktiver Isocyanatumsetzungsprodukte sind dem Fachmann bekannt. Solche Isocyanatumsetzungsprodukte, die zumindest anteilig in den erfindungsgemäßen PU-Zusammensetzungen enthalten sein müssen, sind Umsetzungsprodukte aus monomeren Polyisocyanaten, insbesondere Di- oder Triisocyanaten, und Polyolen. Dabei wird ein NCO/OH-Verhältnis größer als 1 bei der Reaktion gewählt und NCO-reaktive Produkte erhalten.

Als Polyole sind die üblichen dem Fachmann bekannten Polyolverbindungen einzusetzen. Im Rahmen der Erfindung können eine Vielzahl von mehrfunktionellen Alkoholen eingesetzt werden. Diese sollen 2 bis 10, insbesondere von 2 bis 4 OH-Gruppen pro Molekül aufweisen. Es kann sich dabei um niedermolekulare Verbindungen handeln oder um OH-funktionelle Polymere. Es ist jedoch notwendig, dass diese Verbindungen keine weiteren mit NCO-Gruppen reaktiven funktionellen Gruppen aufweisen. Bei den Verbindungen mit mehreren OH-Gruppen kann es sich um solche handeln, die endständige OH-Gruppen tragen oder es können Verbindungen sein, die über die Kette verteilt seitenständig OH-Gruppen aufweisen. Bei den OH-Gruppen handelt es sich um solche, die mit Isocyanaten reagieren können. Es kann sich um primäre, sekundäre oder tertiäre OH-Gruppen handeln, bevorzugt sind jedoch primäre oder sekundäre OH-Gruppen. Beispiele für geeignete Verbindungen sind Polyole auf Basis von Polyethern, Polyestern oder Polyalkylenen, die flüssig, amorph oder kristallin sein können.

Geeignet sind beispielsweise aliphatische oder araliphatische Alkohole mit 2 -10 OH-Gruppen pro Molekül. Es können bevorzugt primäre und sekundäre Alkohole eingesetzt werden. Es können trifunktionelle Alkohole wie Glycerin, Trimethylolethan und/oder Trimethylolpropan, oder höher funktioneller Alkohole, wie beispielsweise Pentaerythrit oder Zuckeralkohole, eingesetzt werden. Es können auch Hydroxy-alkylsubstituierte Phenole eingesetzt werden oder cycloaliphatische Diole oder Polyole.

Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 1,10-Decandiol, 1,12-Dodecandiol, Dimerfettalkohol und deren höhere Homologen oder Isomeren. Ebenfalls geeignet sind höherfunktionelle Alkohole wie beispielsweise Glycerin, Trimethylolpropan, Pentaerythrit oder ihre Homologe. Geeignete aliphatische Alkohole besitzen ein Molekulargewicht von 60 bis 600 g/mol, insbesondere bis ungefähr 400 g/mol. Insbesondere werden jedoch lineare Alkohole mit 2 bis 30C-Atomen eingesetzt, die zwei bis zu vier OH-Gruppen aufweisen.

Ebenfalls geeignet als Polyolkomponente sind Umsetzungsprodukte niedermolekularer polyfunktioneller Alkohole mit Alkylenoxiden, sogenannte Polyether. Die Alkylenoxide weisen vorzugsweise 2 bis 4C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid, Butylenoxid oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole mit den genannten Alkylenoxiden zu Polyetherpolyolen geeignet. Weitere, im Rahmen der Erfindung geeignete Polyole, entstehen durch Polymerisation von Tetrahydrofuran (Poly-THF). Die Polyetherpolyole sind bekannt und kommerziell erhältlich.

Insbesondere geeignet sind beispielsweise Polyetherpolyole mit einem Molekulargewicht von 100-10 000 g/mol, vorzugsweise 400 - 2 000 g/mol (zahlenmittleres Molekulargewicht M_{N} , gemessen über GPC) und insbesondere Polypropylenglykol oder Polyethylenglykol mit 2 bis 4 OH-Gruppen. Es können statistische und/oder Blockcopolymere eingesetzt werden.

Weiterhin sind Polyesterpolyole geeignet. Derartige Polyesterpolyole umfassen bevorzugt die Umsetzungsprodukte von polyfunktionellen, vorzugsweise difunktionellen Alkoholen, gegebenenfalls zusammen mit geringen Mengen an trifunktionellen Alkoholen, und polyfunktionellen, vorzugsweise difunktionellen und/oder trifunktionellen Carbonsäuren. Anstatt freier Polycarbonsäuren können auch die entsprechenden Polycarbonsäureanhydride oder entsprechende Polycarbonsäureester mit Alkoholen m t vorzugsweise 1 bis 3C-Atomen eingesetzt werden. Die Polycarbonsäuren können aliphatisch, cycloaliphatisch, aromatisch oder heterocyclisch sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Glutarsäureanhydrid, Maleinsäure, Maleinsäureanhydrid, Fumarsäure, Dimerfettsäure oder Trimerfettsäure, Zitronensäure oder Trimellithsäure oder Gemische geeignet.

Zur Herstellung derartiger Polyesterpolyole geeignete Alkohole sind insbesondere Hexandiol, 1,4-Hydroxymethylcyclohexan, 2-Mefihyl-1,3-propandiol, Butantriol-1,2,4, Triethylenglykol, Tetraethylenglykol, Ethylenglykol, Polyethylenglykol, Dipropylenglykol, Polypropylenglykol, Dibutylenglykol und Polybutylenglykol.

Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12C-Atomen und anschließender partieller Umesterung der Triglycerid-Derivate zu Alkylesterpolyolen mit 1 bis 12C-Atomen im Alkylrest hergestellt werden. Dem Fachmann sind OH-funktionelle Polyester allgemein bekannt und sie sind kommerziell erhältlich. Insbesondere geeignet sind zwei oder drei endständige OH-Gruppen enthaltene Polyesterpolyole. Polyesterpolyole weisen bevorzugt ein Molekulargewicht von ca. 200 bis 5 000 g/mol auf, insbesondere unter 2500 g/mol.

Eine weitere geeignete Gruppe von Polyalkoholen sind Polyurethanpolyole. Es handelt sich dabei um Umsetzungsprodukte von Polyisocyanaten, bevorzugt Diisocyanaten, mit Polyolen, insbesondere Diolen. Dabei können die Polyole aus der oben erwähnten Gruppe von Polyolen ausgewählte werden. Die Mengen werden so gewählt, dass endständig OH-terminierte Produkte erhalten werden. Die Funktionalität der PU-Polyole soll bevorzugt zwischen 2 und 4 betragen. Das Molekulargewicht soll zwischen 400 bis zu 3000 g/mol betragen. Solche OH-terminierten PU-Polyole sind dem Fachmann bekannt.

Weitere geeignete Polyole sind beispielsweise Polycarbonat-Polyole und Dimerdiole, sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden. Ebenfalls als Polyolkomponente geeignet sind Polyacetale. Polyacetale sind beispielsweise Umsetzungsprodukte aus Glykolen, beispielsweise Diethylenglykol oder Hexandiol, mit Formaldehyd Polyacetale können ebenfalls durch die Polymerisation cyclischer Acetale erhalten werden. Weiterhin als Polyole geeignet sind Polycarbonate. Eine weitere Gruppe der erfindungsgemäß einsetzbaren Polyole sind die Polyester auf der Basis von ε-Caprolacton. Solche Polyole sollen im Molekül mindestens 2 OH-Gruppen aufweisen.

Als Isocyanat in den erfindungsgemäßen Isocyanatumsetzungsprodukten können alle dem Fachmann bekannten monomeren Di- oder Polyisocyanate eingesetzt werden. Es handelt sich dabei um niedermolekulare aromatische Isocyanatverbindung, die zwei oder mehr NCO-Gruppen aufweisen können. Anteilsmäßig können ggf. auch aliphatische oder cycloaliphatische Isocyanate enthalten sein.

Geeignete Isocyanate sind beispielsweise ausgewählt aus der Gruppe 4,4'-Diphenylmethandiisocyanat (MDI), hydriertes oder teihydriertes MDI (H12MDI, H6MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanatocyclohexan, 1,6-Diisocyanato-2,2,4-trimethylhexan, 1,6-Diisocya-nato-2,4,4-trimethylhexan, 1-Isocyanatomethyl-3-isocyanato-1,5,5-trimethylcyclo-hexan (IP-DI), chlorierte und bromierte Diisocyanate, phosphorhaltige Diisocyanate, Tetra-methoxybutan-1,4-düsocyanat, Naphthalin-1,5-diisocyanat (NDI), Butan-1,4-diisocyanat. Hexan-1.6-diisocyanat (HDI), Dicyclohexylmethandüsocyanat, Tetramethylen-, Hexamethylen-, Undecan-, Dodecamethylen-, 2,2,4-Trimethyl-hexan-2,3,3-Trimethyl-hexamethyleridiiso-cyanat, Cyclohexan-1,4-diisocyanat, Ethylendiisocyanat, Methytentriphenytthisocyanat (MIT), Phthalsäure-bis-isocyanato-ethylester, Diisocyanate mit reaktionsfähigen Halogenatomen, wie 1-Chlor-methylphenyl-2,4-diisocyanat, 1-Brommethyl-phenyl-2,6-diisocyanat,3,3-Bis-chlormethylether-4,4'-diphenyldiisocyanat. Weitere einsetzbare Diisocyanate sind Trimethylhexamethylendiisocyanat, 1,4-Diisocyanatobutan, 1,12-Diisocyanatododecan und Dimerfettsäuredüsocyanat, Lysinesterdiisocyanat, 4,4-Dicyclohexylmethandiisocyanat, 1,3-Cyclohexan- oder 1,4-Cyclohexandiisocyanat.

Als trifunktionelle Isocyanate geeignet sind solche Isocyanate, die durch Trimerisation oder Oligomerisation von Diisocyanaten oder durch Reaktion von Diisocyanaten mit trifunktionellen hydroxylgruppenhaltigen Verbindungen entstehen. Beispiele dafür sind Trimerisierungsprodukte der Isocyanate HDI, MDI oder IPDI oder Addukte aus Diisocyanaten und niedermolekularen Triolen, wie Trimethylolpropan oder Glycerin.

Insbesondere geeignet sind auch monomere, asymmetrische Diisocyanate, die NCO-Gruppen mit einer unterschiedlichen Reaktivität gegenüber Diolen besitzen. Beispiele für besonders geeignete aromatische Diisocyanate mit unterschiedlich reaktiven NCO-Gruppen sind die Isomeren des TDI, NDI, 1,3-Phenylendiisocyanat oder 2,4' MDI. Mindestens 50% der NCO-Gruppen des Isocyanatumsetzungsprodukts sind auf Basis aromatischer Isocyanate, insbesondere über 90 %.

Aus den oben erwähnten Polyolen und Polyisocyanaten werden durch bekannte Verfahren die erfindungsgemäß geeigneten Isocyanatumsetzungsprodukte hergestellt. Das kann beispielsweise bei Raumtemperatur geschehen, es können auch erhöhte Temperaturen angewandt werden. Die Ausgangsverbindungen reagieren im allgemeinen spontan miteinander, es kann aber auch notwendig sein, dass Katalysatoren, wie metallorganische Verbindungen oder organische Aminoverbindungen zugesetzt werden. Weiterhin können die bekannten Verfahren eingesetzt werden, nicht umgesetzte monomere Polyisocyanate zu entfernen. Das kann beispielsweise durch Destillation geschehen, durch Fällen oder durch Abfangen der monomeren Isocyanate durch niedermolekulare reaktive Bestandteile.

In einer bevorzugten Ausführungsform werden zur Herstellung der Isocyanatumsetzungsprodukte asymmetrischen Diisocyanate verwendet. Auf diese Weise kann die selektive Reaktion der monomeren asymmetrischen Diisocyanate mit den Diolen ausgenutzt werden, so dass bei geeigneten stöchiometrischen Verhältnissen und geeigneter Reaktionsführung das Reaktionsprodukt nur einen geringen Anteil an monomeren, niedermolekularen Diisocyanaten aufweist. Dabei kann ggf. auf einen Destillationsschritt verzichtet werden.

Die erfindungsgemäßen Isocyanatumsetzungsprodukte sollen ein Gehalt an monomeren, nicht umgesetzten aromatischen Polyisocyanaten von unterhalb 1 Gew.-% aufweisen, insbesondere weniger als 0,1 Gew.-%. Sie weisen ein Molekulargewicht von 300 bis 3000 g/mol auf, vorzugsweise kleiner als 1500. Die Anzahl der NCO-Gruppen pro Molekül beträgt zwischen 1 bis 5, bevorzugt 2 oder 3, insbesondere sind ausschließlich reaktive aromatische Isocyanatgruppen enthalten. Die Umsetzungsprodukte enthalten mindestens zwei Urethangruppen im Molekül.

Je nach Molekulargewicht und den ausgewählten Polyolkomponenten können diese Isocyanatumsetzungsprodukte flüssig oder fest vorliegen. Ebenfalls ist es möglich, dass die lsocyanatumsetzungsprodukte in inerten organischen Lösemitteln gelöst sind.

Diese Isocyanatumsetzungsprodukte können als vernetzende Bestandteile direkt in reaktiven PU-Zusammensetzungen eingesetzt werden, beispielsweise in 1 K- oder 2K-PU-Zusammensetzungen, oder sie werden in weiteren Reaktionsschritten mit geeigneten Verbindungen umgesetzt, beispielsweise den oben aufgezählten OH-Polyolen, die mit den NCO-Gruppen reagieren können, und können auf diese Art Bestandteile von NCO-haltigen Polyurethanprepolymeren sein. Solche PU-Prepolymere können dann beispielsweise in den oben erwähnten PU-Zusammensetzung eingesetzt werden. Es ist auch möglich Isocyanatzusammensetzungen und PU-Prepolymere gleichzeitig einzusetzen.

Der Gehalt üblichen monomeren, aromatischen Isocyanaten soll möglichst gering sein. Weiterhin ist es möglich, durch die Verwendung ausschließlich der erfindungsgemäße Isocyanatumsetzungsprodukte andere niedermolekulare Isocyanatverbindungen, die Migrate bilden können, zu ersetzen.

Die erfindungsgemäßen reaktiven Polyurethanprepolymere können in reaktiven ein- und zweikomponentigen Kleb-/Dichtstoffen, Montageschäumen, Vergussmassen sowie in Weich-, Hart- und Integralschäumen verwendet werden. Ein wesentlicher Vorteil gegenüber den bekannten reaktiven Polyurethanzusammensetzungen ist der signifikant niedrigere Anteil an arbeitshygienisch bedenklichen migrationsfähigen, aromatischen Di- oder Polyaminen in den entstehenden vernetzten Endprodukten.

Die die erfindungsgemäßen PU-Zusammensetzungen können noch weitere Additive enthalten. Dabei kann es sich beispielsweise um Katalysatoren, Harze, Lösemittel, Pigmente, Stabilisatoren, Haftvermittler, Farbstoffe, Verlaufsmittel und ähnliche Hilfsstoffe handeln. Diese kann der Fachmann je nach dem Anwendungszweck auswählen.

Eine bevorzugte Anwendung der PU-Zusammensetzungen sind reaktive, einkomponentige feuchtigkeitshärtenden Schmelzklebstoffe. Diese Schmelzklebstoffe können zusätzlich klebrigmachende Harze, haftvermittelnde Zusätze, Füllstoffe, Pigmente, Weichmacher, Stabilisatoren und/oder Katalysatoren, Wachse oder deren Mischungen sowie weitere übliche Hilfs- und Zusatzstoffe enthalten.

Als klebrigmachende Harze können z.B. Abietinsäure, Abietinsäureester, Terpenharze, Terpenphenolharze, phenolmodifizierte Styrolpolymere, phenolmodifizierte α-Methylstyrolpolymere oder Kohlenwasserstoffharze Verwendung finden. Als Katalysatoren sind die bekannten metallorganischen und / oder aminischen Katalysatoren in Mengen bis zu 2 % geeignet, z.B. die metallorganische Verbindungen des Zinns, Eisens, Titans oder Wismuts wie Zinn(II)salze von Carbonsäuren oder die Dialkyl-Zinn(IV)-Carboxylate. Als Antioxidantien können beispielsweise die handelsüblichen sterisch gehinderten Phenole und/oder Thioether und/oder substituierten Benzotriazole oder die sterisch gehinderten Amine vom Typ des HALS eingesetzt werden. In speziellen Zusammensetzungen können insbesondere auch Weichmacher zugesetzt werden. Dabei handelt es sich bevorzugt um Weichmacher vom Typ Phthalsäureester oder naphthenische Öle.

Eine weitere Ausführungsform der Erfindung setzt die erfindungsgemäßen PU-Zusammensetzungen als Kaschierklebstoff ein. Bei der Verwendung als Kaschierklebstoff kann zum Erreichen bestimmter zusätzlicher Eigenschaften, wie thermischer und chemischer Beständigkeit, noch ein Zusatz von Epoxidharzen, Phenolharzen, Novolaken, Resolen oder Melaminharzen und ähnlichen Polymeren zweckmäßig sein. Außerdem können in diesem Fall die reaktiven PU-Zusammensetzungen auch in Lösung bereitgestellt werden, vorzugsweise in polaren, aprotischen Lösungsmitteln. Die bevorzugten Lösungsmittel haben dabei einen Siedebereich (bei Normaldruck) von etwa 50°C bis 140°C.

Eine weitere Ausführungsform der Erfindung setzt die erfindungsgemäßen PU-Zusammensetzungen als flüssige 1 K- oder 2K-Klebstoffe oder Dichtmassen ein. Bei 2K-Systemen kann die zweite Bindemittelkomponente nach dem Anwendungszweck und den Eigenschaften ausgewählt werden. Es kann sich dabei um solche Verbindungen handeln, die mindestens zwei mit NCO-Gruppen reaktive funktionelle Gruppen aufweisen. Beispiele dafür sind OH, SH, COOH, NH, NH2-Gruppen, bevorzugt Polyole. Die Auswahl der Polyole richtet sich dabei nach der Verwendungsart dieser Kleb-/Dichtstoff-Zusammensetzung, beispielsweise hydroxyfunktionelle Polyole auf Polyester-, Polyurethan- Polyether- oder Polyolefinbasis. Bei 1 K-Kleb/Dichtstoffen wird bevorzugt das Isocyanatumsetzungsprodukte zu höhermolekularen PU-Prepolymeren umgesetzt oder ist zusätzlich enthalten. Es werden dann durch Feuchtigkeit vernetzende Systeme erhalten.

Die erfindungsgemäß geeigneten 1 K- oder 2K-Polyurethanzusammensetzungen sind insbesondere auch als Polyurethanschaum einzusetzen. Es handelt sich dabei um Mischungen von reaktiven Polyurethanen, die entweder bei der Applikation unter den Bedingungen der Aushärtung einen Schaum bilden, beispielsweise durch Reaktion mit Luftfeuchtigkeit, oder es handelt sich um Mischungen, die schaumbildende Substanzen enthalten. Dabei kann es sich um komprimierte Gase handeln, die unter verminderten Druck aufschäumen, wie beispielsweise CO₂, N₂O usw. In selbstschäumenden PU-Zusammensetzungen ist es insbesondere zweckmäßig, wenn zusätzlich hochmolekulare, polymere Polyisocyanate enthalten sind. Sie sollen keine monomere Isocyanate enthalten, beispielsweise < 0,1 %. Diese polymere Isocyanate, wie polymeresMDl, sind selbst nicht migrationsfähig bzw, bilden wenig migrationsfähige Polyaminverbindungen.

Polyurethanschäume gemäß der Erfindung können noch weitere dem Fachmann bekannten Additive enthalten, wie beispielsweise Haftvermittler, Weichmacher, Netzmittel, Füllstoffe, Flammschutzmittel, Schaumbildner, Fasern, Masterbatche oder Pigmente. Insbesondere enthalten sie Katalysatoren, die für eine schnelle Aushärtereaktion und Verschäumungsreaktion geeignet sind. Es handelt sich dabei im allgemein um aliphatische tertiäre Amine, beispielsweise solche, die zusätzlich noch gegenüber den Isocyanaten reaktive Gruppen tragen. Ganz besonders bevorzugte Katalysatoren sind jedoch die Derivate des Morpholins, wie Bis-(morpholinopropyl)-propylamin, Morpholinopropylpyrrolidon oder Dimorpholinodiethylether (DMDEE) oder Di-2,6-dimethylmorpholinoethylether.

Montageschäume werden am Ort ihrer Verwendung erzeugt, man spricht daher auch von einem Ortschaum, insbesondere handelt es sich hier um feuchtigkeitshärtende Einkomponenten-Systeme. Die zu verschäumende Zusammensetzung befindet sich dabei in der Regel in Einweg-Druckbehältern. Diese Schäume aus Polyurethan dienen vor allem im Bauwesen zum Dichten, Dämmen und Montieren, z.B. von Fugen, Dachflächen, Fenstern und Türen. Es können aber die erfindungsgemäßen Isocyanatzusammensetzungen auch in PU-Schaummaterialien eingesetzt werden, beispielsweise als PU-Hartschaum für Gegenstände.

Eine weitere bevorzugte Anwendungsform verwendet die erfindungsgemäßen Polyurethanzusammensetzungen als Bestandteil von knetbaren Formmassen oder Vergussmassen. Es hardelt sich dabei beispielsweise um aushärtbare flüssige oder pastöse Massen, die auch in Lebensmittelbereich oder im medizinischen Bereich eingesetzt werden können. Dabei ist darauf zu achten, dass die ggf. noch zusätzlich notwendige Hilfsstoffe und Additive keine gesundheitsgefährdenden Eigenschaften aufweisen, insbesondere sollen sie die entsprechende Zulassung zur Verwendung in medizinischen Produkten aufweisen. Beispiele für solche Massen sind Vergussmassen zum Verkleben von Dialysefiltern, Vergußmassen zum Verkleben von Filtern für flüssige Lebensmittel, knetbare Formmassen zur Verwendung als Gipsersatz in der Medizintechnik, oder ähnliche Verwendungen. Dabei sind die prinzipiellen Zusammensetzungen solcher Massen bekannt, die erfindungsgemäß einsetzbaren reaktiven PU-Zusammensetzungen ergeben jedoch Produkte, die im wesentlichen keine migrationsfähigen gesundheitsgefährdenden Polyamine enthalten.

Die erfindungsgemäß einsetzbaren PU-Zusammensetzungen sollen eine rasche Vernetzungsreaktion unter den jeweiligen Applikationsbedingungen zeigen. Weiterhin sollen die mechanischen Anforderungen an das vernetzte Polymere erfüllt werden. Bei einer besonderen Ausgestaltungsform der Erfindung werden zu den PU-Zusammensetzungen außer den erfindungsgemäß geeigneten Isocyanatumsetzungprodukten und/oder Polyurethanprepolymeren keine weiteren monomeren oder oligomeren Di- oder Triisocyanate zugesetzt. Weiterhin sollen auch keine anderen niedermolekularen Isocyanat-haltigen Prepolymere aus solchen aromatischen Isocyanaten mit einem Molekulargewicht unterhalb von 3000 g/mol enthalten sein. Die Isocyanatreaktivität der erfindungsgemäß geeigneten PU-Zusammensetzungen kann über den Anteil des lsocyanatumsetzuncisproduktes beeinflusst werden. Gegebenenfalls ist es möglich, dass zusätzlich polymere Isocyanate, insbesondere polymere aromatische Isocyanate enthalten sein können.

Werden die erfindungsgemäßen vernetzbaren PU-Zusammensetzungen, wie Vergußmassen, Klebstoffe, Dichtmassen, Schäume, ausgehärtet, entstehen bei der Vernetzungsreaktion Umsetzungsprodukte der NCO-haltigen Verbindungen. Erfindungsgemäß hat sich gezeigt, dass die bereitgestellten Isocyanatumsetzungsprodukte oder PU-Prepolymere eine hohe Reaktivität bei der Vernetzungsreaktion zeigen und in das Polymernetzwerk eingebaut werden. Selbst geringe Anteile an nicht vollständig vernetzten lsocyanatumsetzungsprodukten oder PU-Prepolymeren führen nicht zur Bildung von Migraten, d.h. migrationsfähigen aromatischen Di- oder Polyaminen. Unabhängig davon, ob diese im Netzwerk nicht umgesetzten Bestandteile später mit Luftfeuchtigkeit zu Aminogruppen-haltigen Substanzen reagieren, hat sich bei der erfindungsgemäßen Verwendung gezeigt, dass die entsprechenden vernetzten Produkte nach Lagerung einen deutlich verminderten Anteil an migrationsfähigen Di- oder Polyaminen aufweisen. Die entstehenden vernetzten Produkte zeigen nur verringerte oder keine migrationsfähige Amine an der Oberfläche. Auch unter den Bedingungen eines Extrationstests werden nur sehr geringe Anteile an extrahierbaren aromatischen Aminoverbindungen erhalten.

Die Menge der extrahierbaren aromatischen Polyamine wird gemäß dem oben angegebenen Verfahren bestimmt. Dabei kann als Extraktionsmedium destilliertes Wasser eingesetzt werden. Vemetzte Zusammensetzungen, die als Isocyanatkomponete nur die erfindungsgemäß geeigneten Isocyanatumsetzungsprodukte und PU-Prepolymere enthalten, weisen geringe Gehalte an Migraten auf, mit Messwerten unterhalb von 100 µg/l pro g Festkörper, bevorzugt weniger als 50 µg/l, insbesondere weniger als 20 µg/l pro g Festkörper.

Besonders geeignet sind die erfindungsgemäßen Zusammensetzungen in Verwendungen, die eine Gefährdung von Menschen hervorrufen können. Beispiele dafür sind verklebte Gegenstände, wie Folien, Etiketten, Verpackungen, die mit Lebensmitteln in Kontakt kommen können. Weitere Beispiele sind Gegenstände im medizinischen Bereich, beispielsweise Pflaster, Filter, medizinisches Stützmaterial, wie Gipsersatz, und ähnliche Produkte. Weiterhin sind auch aus PU-Materialien hergestellte Gegenstände betroffen, die in häufigen Kontakt mit Menschen sind, wie beispielsweise Kleidung, Schuhe, Möbeloberflächen oder Oberflächen von Anbauteile in Kraftfahrzeugen.

Die aus den erfindungsgemäßen 1K- oder 2K-PU-Zusammensetzungen hergestellten Gegenstände und Produkte enthalten nach der Vernetzung keine migrationfähigen Bestandteile, die aus den Isocyanaten oder ihren Vorprodukten stammen. Auch bei späteren Verarbeitungsschritten, wie Sterilisieren, Erwärmen durch das Füllgut, Lagerung bei feuchter Atmosphäre, entstehen auch auf längere Zeit keine oder nur sehr geringe Anteile an migrationsfähigen aromatischen Polyamin.

Die erfindungsgemäß geeigneten reaktiven Isocyanatumsetzungsprodukte oder PU-Prepolymere und die daraus hergestellten Polyurethan-Zusammensetzungen werden insbesondere in reaktiven Kleb-/Dichtstoffen. Vergussmassen sowie in Weich-, Hart- und Integralschäumen verwendet. Die Verwendung geschieht beispielsweise in ein- oder zweikomponentiger Form. Es werden Produkte mit guter Vernetzungsreaktion und guten mechanischen Eigenschaften erhalten, ohne dass zusätzlich NCO-Gruppen-haltige oligomere oder monomere Isocyanate eingesetzt werden müssen. Ein Vorteil gegenüber den bekannten reaktiven ein- und zweikomponentigen Kleb-/Dichtstoffen, Montageschäumen, Vergussmassen sowie Weich-, Hart- und Integralschäumen ist der signifikant niedrige Anteil an arbeitshygienisch bedenklichen und migrationsfähigen monomeren Diisocyanathydrolyseprodukten. Ein weiterer Vorteil gegenüber bekannten monomerarmen reaktiven Polyurethanen liegt darin, dass die Verminderung der Migrate auch ohne aufwendige und kostspielige Reinigungsschritte erzielt werden kann. Durch die schonende, selektive Reaktion werden reaktive Polyurethane erhalten, die beispielsweise frei sind von den üblicherweise bei thermischen Aufarbeitungschritten anfallenden Nebenprodukten, wie Vernetzungs- oder Depolymerisationsprodukten.

In der Erfindung wird nachfolgend durch Beispiele erläutert.

### Beispiel 1 (Vergleichsversuch):

Ein PU-Schaum-Vorläufer aus 70 g PPG 400, 140 g PPG 1000, 312 g Desmodur VK5, sowie 2,6 g DMDEE (Katalysator) wird durch Mischen hergestellt.
Die nicht vernetzte Masse hat ein NCO-Gehalt von ca. 12 %.
Durch Einbringen in ein Gefäß und Härtung mit Luftfeuchtigkeit entsteht eine feste aufgeschäumte Masse.

### Beispiel 2 (erfindungsgemäß) :

Aus PPG (M_{N} 750) wird mit MDI ein Prepolymer hergestellt mit einem Isocyanatüberschuss (NCO:OH = 5:1) in Ethylacetat. Das Produkt wird von monomeren MDI durch Dünnschicht-Destillation befreit (MDI < 01 Gew.-%). Es wird die allgemeine Verfahrensweise gemäß WO 01/40342 durchgeführt. Aus 100g des lösungsmittelfreien Reaktionsprodukts und 0,5 g DMDEE wird ein PU-Schaumvorläufer hergestellt.
Man erhält ein flüssiges Material mit einem NCO-Gehalt von ca. 6 %.
Die schäumt bei Raumtemperatur an Umgebungsluft bei der Vernetzung auf.

### Beispiel 3 (Vergleichsversuch):

200 g Ricinusöl werden mit 0,62g DABCO gemischt (Komponente A)
80 g Desmodur VKS 20 werden als B Komponente zugesetzt.
Das NCO/OH-Verhältnis beträgt 1,13:1. Die beiden Komponenten werden gemischt und vernetzen danach.

### Beispiel 4 (erfindungsgemäß):

100 g Ricinusöl werden mit 0,62 g DABCO gemischt (Komponente A)
Als Komponente B werden 215 g eines Umsetzungsprodukts gemäß Beispiel 2 zugegeben.
Das NCO/OH-Verhältnis beträgt 1,13:9.
Die Masse vernetzt bei Raumtemperatur nach dem Mischen.

### Beispiel 5 (Vergleichsversuch):

Aus 52,5 g PPG 1000, 140 g, PPG 2000, 70g Desmodur VKS 20 sowie 85,8 g Desmodur 44 wird eine Mischung hergestellt und mit 1,2 g DMDEE versetzt.
Es wird ein nicht vernetztes PU-Prepolymer erhalten (11 % NCO-Gehalt). Das erhaltene Umsetzungsprodukt vernetzt bei Kontakt mit Umgebungsluft bei Raumtemperatur. Zwei Holzsubstrate können mit dem Klebstoff verklebt werden.

### Beispiel 6: (erfindungsgemäß)

Die Mischung gemäß Beispiel 2 wird als 1-K-Klebstoff auf ein Holzsubstrat aufgetragen und unmittelbar danach mit einem weiteren Substrat verklebt. Die Verklebung härtet unter Umgebungstemperatur aus.

### Extraktionsverfahren:

60 g der Zusammensetzungen eines der oben genannten Beispiele wurden auf einer Petrischale (Fläche ca. 530 cm²) verteilt. Nach 15-minütigen Aushärten wurden 60 g destilliertes Wasser auf die Mischung gegeben, dabei war die ganze Fläche mit Wasser benetzt.
Die Schalen wurden bei 37°C und 70% Luftfeuchtigkeit 24 Stunden gelagert.
Die entsprechenden Produkte waren hart und ausreagiert.
Der wässrige Überstand der Proben wurde abdekantiert und fotometrisch auf aromatische Amine geprüft (§ 35 LMBGL00.00-6).

Es wurden alle aromatischen Amine als Summe gemessen, als Vergleichsberechnungswert wird Anilinhydrochlorid genommen.

| | |
|---|---|
| Schaum, Versuch 1 | 830 µg/l |
| Schaum, Versuch 2 | 2,9 µg/l |
| 2K-Klebstoff, Versuch 3 | 33,6 µg/l |
| 2K-Klebstoff, Versuch 4 | < 2 µg/l |
| 1 K-Klebstoff, Versuch 5 | 65 µg/l |
| 1 K-Klebstoff, Versuch 6 | 2,5 µg/l |

| | |
|---|---|
| Desmodur® VK5 | Gemisch aus MDI und höheren Homologen |
| Desmodur® VK5 20 | Gemisch aus MDI und höheren Homologen |
| DABCO | Diazanbicyclooctan |
| PPG | Polypropylenglykol |
| DMDEE | Dimorpholinodiethylether |
| Desmodur® 44 | 4,4-MDI |

## Patentansprüche

1. Vernetzende 1-Komponenten- oder 2-Komponenten- Polyurethanzusammensetzung, die ein NCO-reaktives Isocyanatumsetzungsprodukt und/oder ein Polyurethanprepolymer enthält, wobei das Polyurethanprepolymer mit mit diesem Isocyanatumsetzungsprodukt als Synthesebaustein hergestellt worden ist, **dadurch gekennzeichnet, dass** das Isocyanatumsetzungsprodukt ein Reaktionsprodukt aus Polyolen und aromatischen Diisocyanaten ist, eine Molmasse zwischen 300 bis 3000 g/mol und mindestens zwei NCO-Gruppen aufweist, und die 1 K- oder 2K-Polyurethanzusammensetzung nach der Vernetzung einen Gehalt an migrationsfähigen aromatischen Polyaminen von unterhalb 100 µg/l pro g Festkörper aufweist (gemessen nach LMBG L00.00-6).

2. Zusammensetzung nach Anspruch 1, **dadurch gekennzeichnet, dass** die Zusammensetzung weniger als 0,1 Gew.-% nicht umgesetzte monomere oder oligomere aromatische Isocyanate enthält.

3. Zusammensetzung nach einem der Ansprüche 1 oder 2, **dadurch gekennzeichnet, dass** zusätzlich monomerarme polymere aromatische Isocyanate mit einer Funktionalität größer gleich 3 enthalten sind.

4. Zusammensetzung nach einem der Ansprüche 1 bis 3, **dadurch gekennzeichnet, dass** zusätzlich zu den Isocyanatumsetzungsprodukten und/oder Polyurethanprepolymeren keine aromatischen Di- oder Tri-Isocyanate oder Isocyanatprepolymere mit einer Molmasse unterhalb 3000 g/mol zugesetzt werden.

5. Zusammensetzung nach einem der Ansprüche 1 bis 4, **dadurch gekennzeichnet, dass** das Isocyanatunisetzungsprodukt reaktive Isocyanatgruppen auf Basis MDI, TDI, TODI, NDI aufweist.

6. Zusammensetzung nach Ansprüche 1 bis 5, **dadurch gekennzeichnet, dass** der Gehalt an migrationsfähigen aromatischen Aminen unterhalb von 50 µg/l pro g Festkörper beträgt.

7. Verwendung eines reaktiven Isocyanatumsetzungsprodukts, dass eine Molmasse zwischen 300 bis 3000 g/mol sowie mindestens zwei NCO-Gruppen aufweist, hergestellt als Reaktionsprodukt aus Polyolen und aromatischen Diisocyanaten, als Synthesebaustein bei der Synthese von reaktiven Polyurethanprepolymeren oder als vernetzende Komponente in vernetzbaren 1K- oder 2K- Polyurethanzusammensetzungen, die in vernetzter Form nur geringe aromatischen Di- oder Polyamine in migrationsfähiger Form enthalten oder bilden.

8. Verwendung nach Anspruch 7 als reaktiver 1 K- oder 2K- Klebstoff oder Dichtmasse.

9. Verwendung nach Anspruch 7 oder 8 als Laminierklebstoff oder Schmelzklebstoff.

10. Verwendung nach Anspruch 7 als Montageschaum, als Weich-, Hart- oder Integralschaum.

11. Verwendung nach Anspruch 7 als mit Feuchtigkeit aushärtbare plastische Formmasse oder als Vergussmasse.

12. Verwendung nach einem der Ansprüche 7 bis 11, **dadurch gekennzeichnet, dass** weniger als 0,1 Gew.-% monomere aromatische Diisocyanate in der 1K- oder 2K-Zusammensetzung enthalten sind.

13. Verwendung nach einem der Ansprüche 7 bis 12, **dadurch gekennzeichnet, dass** als aromatisches Diisocyanat MDI, TDI, TODI, NDI eingesetzt werden.

14. Verwendung nach einem der Ansprüche 7 bis 13, **dadurch gekennzeichnet, dass** keine weiteren monomeren oder oligomeren aromatische Diisocyanate oder Reaktionsprodukte daraus mit einem Molekulargewicht unterhalb von 3000 g/mol zugesetzt werden.

15. Verwendung nach einem der Ansprüche 7 bis 14, **dadurch gekennzeichnet, dass** die Polyurethanzusammensetzung nach Vernetzung einen Gehalt an migrationsfähigen aromatischen Polyaminen von unterhalb 100 µg/l pro g Festkörper aufweist (gemessen nach LMBG L00.00-6).

16. Formkörper geeignet zur medizinischen Verwendung, **dadurch gekennzeichnet, dass** als durch NCO-Gruppen vernetzendes Polymeres eine vernetzbare Polyurethanzusammensetzung nach einem der Ansprüche 1 bis 6 enthalten ist.

17. Formkörper aus Folienwerkstoffen zum Verpacken von Lebensmitteln oder medizinischen Gegenständen, **dadurch gekennzeichnet, dass** die Folienwerkstoffe Mehrschichtfolien sind, die mit einem Klebstoff auf Basis einer Polyurethanzusammensetzung nach einem der Ansprüche 1 bis 6 verklebt oder beschichtet wurden.

18. Formkörper aus Polyurethanschaum, **dadurch gekennzeichnet, dass** als vernetzende Komponente eine reaktive Polyurethanzusammensetzung nach einem der Ansprüche 1 bis 6 enthalten ist.
